# EUROPEAN PATENT APPLICATION

(11) **EP 4 253 719 A1**
(43) Date of publication of application: **04.10.2023**
(21) Application number: 22165374.4
(22) Date of filing: 30.03.2022
(51) Int. Cl.: E21C 35/22, F16B 5/00

(54) **MOUNTING BAR AND DUST SEALING ASSEMBLY**

(71) Applicant: Sandvik SRP AB, 233 81 Svedala (SE)
(72) Inventor: MALMBERG, Mats, 23381 Svedala (SE)
(74) Representative: Sandvik

(57) **Abstract**

A mounting bar (1) for arranging a dust sealing sheet (20) in connection to a mining equipment (100), the bar (1) comprising: an elongated extension with a specific length having a longitudinal axis (X); a tubular cross sectional shape with a longitudinal recess (3) along one side of the bar (1); and a plurality of slots (2) being radially arranged along the bar (1) throughout the longitudinal direction and being perpendicular to the longitudinal axis (X) wherein at the location of the slot (2) the bar comprises a longitudinal segment (4) interconnecting with the bar (1). A dust sealing assembly (10) comprising a mounting bar (1).

## Description

### Field of invention

The present invention relates to a mounting bar for arranging a dust sealing sheet in connection to a mining equipment and a dust sealing assembly.

### Background

There are different types of screening machines and different applications thereof within the mining and construction industry. An alternative application is recycling equipment.

Vibrating screen devices for fractionating crushed bulk material into fractions of stones with different sizes are used in a variety of applications, such screening devices comprise a screen media mounted on a support frame system via some kind of attachment accessory. The screen media is typically made of wire mesh, rubber or polyurethane and comprises apertures through which the bulk material such as stones and gravels may fall through when loaded on the screen media surface.

When stones, gravels or similar obstacles are handled in these machines the environment becomes dusty. Known solutions of reducing the dust spreeding have a sheet arranged between areas of the equipment where it is dusty. The sheet is typically adhered to one end and another opposite end of the equipment by mounting means, such as strips or grippers. However, these mounting means are not always reliably staying in place, such that the sheet might become loose when operating the machine. The points of arrangement of the sheet at the equipment is not always a straight edge or rim, i.e. there might be bendings or angled corners. The existing mounting means for arranging the sheet comprising different types of mounting means when fitting to differently shaped edges.

There is a need to simplify the mounting means that arranges and mounts the sheet for efficiently stop dust around the equipement. Further, the sheet needs to be arranged in a tight and secure manner.

Thus, what is required is a mounting bar for arranging a dust sealing sheet in connection to a mining equipment and a dust sealing assembly that addresses the above problems.

### Summary

It is an object of the present invention to provide a mounting means reliably arranging a sheet on a mining or construction equipment so that the sheet is tightly kept in place. Further there is an object to supply a flexible mounting means that is adaptable to different turns of an edge of the equipment. Another object is to have one type of mounting means fitting to any part of the egde or rim.

The objectives are achieved by providing a mounting bar for arranging a dust sealing sheet in connection to a mining equipment, such that the sheet is functionally and safely arranged throughout operation of the mining or construction machine.

According to a first aspect of the present invention there is provided a mounting bar for arranging a dust sealing sheet in connection to a mining equipment, the bar comprising: an elongated extension with a specific length having a longitudinal axis; a tubular cross sectional shape with a longitudinal recess along one side of the bar; and a plurality of slots being radially arranged along the bar throughout the longitudinal direction and being perpendicular to the longitudinal axis wherein at the location of the slot the bar comprises a longitudinal segment interconnecting with the bar. Thereby a flexible bar is achieved. The bar is to snap on or grip around edges or rims of walls of neighboring equipment components in a mining or construction equipment so that the sheet is tightely mounted between the components so that no dust can pass.

Preferably the slots being evenly distributed throughout the longitudinal direction with two consecutive slots having a specific separation distance in longitudinal direction. This is important in order to have an evenly distributed flexibility.

Optionally the slot having the widest separation distance in longitudinal direction radially opposite of the longitudinal segment such that the slot being non-uniform around the perimeter of a cross section of the bar. This is valuable since adequate tightening and sealing of the sheet is achieved.

Optionally the location of the slot the bar throughout the longitudinal direction of the slot comprising the longitudinal segment having a perimeter being at least 5% of the full perimeter of the cross section of the bar. This gives a good balance of flexibility and stability to the bar.

Preferably the number of slots being at least three. In order to get a sufficient degree of flexibility.

Preferably the bar comprising slots throughout at least 50% of its length.

This gives optimal support and flexibility.

Preferably the slots being arranged in the middle of the length of the bar. This is advantageous in order to have a functional bar.

Optionally the material of the bar being a polymer. This is a material with good flexibility.

According to a second aspect of the present invention there is provided a dust sealing assembly comprising a mounting bar, wherein the assembly comprising;
a dust sealing sheet arranged between two walls of a mining equipment; and wherein a plurality of mounting bars being arranged at the edges for tightly sealing the sheet between the edges. The dust sealing sheet being e.g. a polymer or a rubber cloth.

Optionally the dust sealing assembly comprising the plurality of mounting bars being arranged one adjacent to another in longitudinal direction throughout the edges of the walls. This makes the sheet being optimally stretched, without any folds risking to leak dust.

### Brief description of drawings

A specific implementation of the present invention will now be described by way of example only and with reference to the following drawings in which:
Figure 1a is a perspective view of a mounting bar for arranging a dust sealing sheet in connection to a mining or construction equipment;
Figure 1b is a cross section taken along A-A in figure 1a;
Figure 1c is a cross section taken along B-B in figure 1a;
Figure 2 is a perspective view of a bended mounting bar;
Figure 3 is a perspective view of a further embodiment of a mounting bar;
Figure 4 is a perspective view of a mining/construction equipment having mounting bars for arranging a dust sealing sheet.

### Detailed description

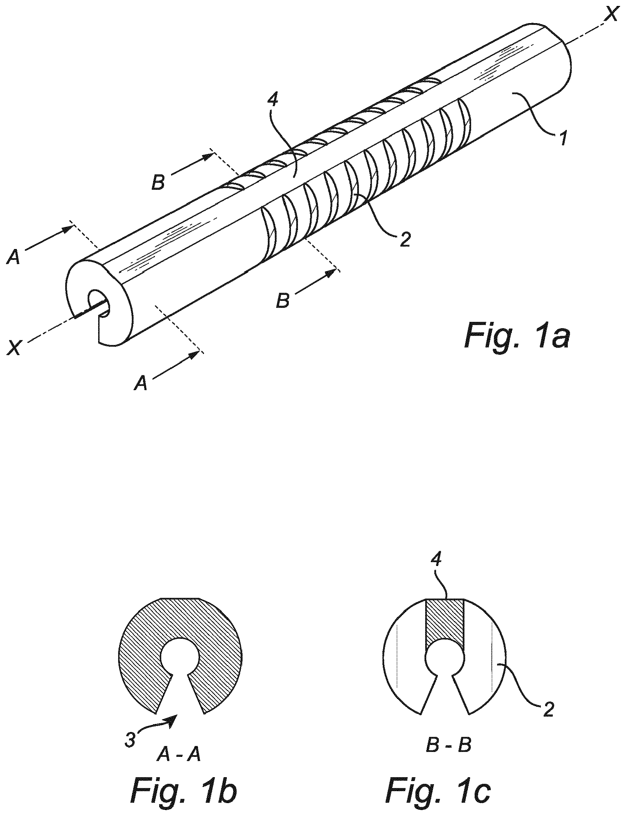

Figure 1a discloses a first embodiment of a mounting bar 1 for arranging a dust sealing sheet in connection to a mining or construction equipment. The bar 1 has an elongated extension along a longitudinal axis X. The bar has a tubular shape so that the outer perimeter is mainly circular. In the middle of the bar is a mainly circular void extending throughout the entire length. At one side of the bar there is a recess 3 defining an opening along the full length of the bar and interconnecting radially with the void of the interior of the bar. Figure 1b discloses a cross section taken along A-A in figure 1a, in which the recess 3 is visible.

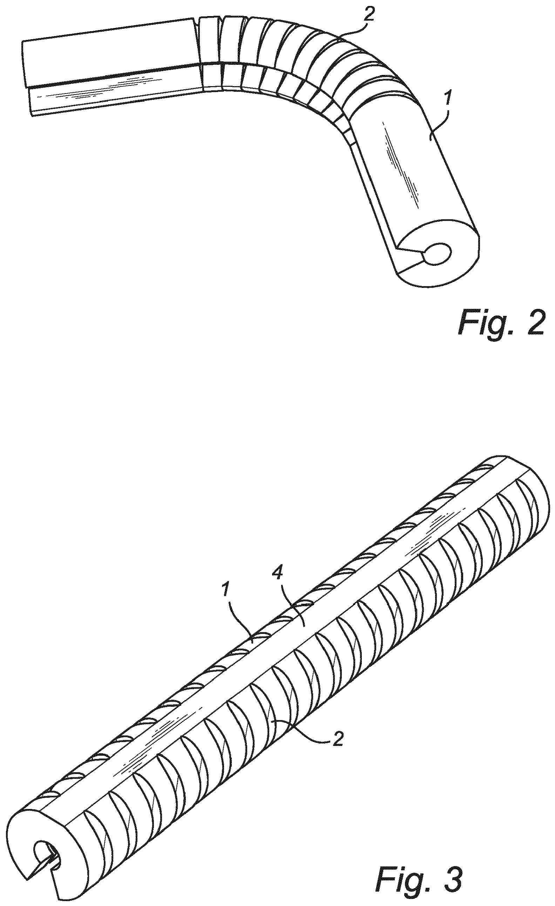

Slots 2 are arranged perpendicular to the axis X. The slot 2 is a narrow opening creating a groove radially in the bar. The slots are arranged at the middle of the bar seen in the lengthwise direction. The number of slots 2 is at least three. It can also be five, seven, nine or as in this figure 11 slots. Also an even number of slots would be possible, such as four, six, eight or ten. Even a higher number of slots might be arranged on a bar (see figure 3). The same distance in longitudinal direction applies between two neighbouring slots, so that the slots are evenly distributed. The separation distance between two slots following one upon the other in longitudinal direction is preferably in the range of 10 to 20 % of the diameter of the bar 1. At least 50% of the length of the bar comprises slots.

The slots 2 nearly cut through the full cross sectional area of the bar 1, the remaining part of the bar that is not cut through is defined as a longitudinal segment 4. Figure 1c discloses a cross section taken along B-B in figure 1a, so at the location of one of the slots 2. In this cross section the longitudinal segment 4 is disclosed. The longitudinal segment 4 might have a flattened outside, so that the perimeter does not follow a strict circular shape in this area. The outer side of the longitudinal segment defines 5% or 10% of the full perimeter of the bar.

The shape of the slot 2 varies around the perimeter so that the slot 2 has its smallest opening close to the longitudinal segment 4 and the opening of the slot being largest opposite to the longitudinal segment 4.

Figure 2 discloses a bent version of the bar 1 in figure 1. The bar can be bent and twisted to fit to an end rim of a section having not only a straight elongation. When there is an edge corner the bent version of the bar is easily fitted to the corner.

Figure 3 discloses a further embodiment of a mounting bar 1. Slots 2 are arranged throughout the entire length of the bar. Just as for the first embodiment the distance separating two neighboring slots 2 is the same throughout the lengthwise extension of the bar 1. This embodiment of the bar does not have a specific length, the profile is suitable to be cut in length pieces fit for its purpose. The same configuration of the slots 2 and the longitudinal segment 4 applies as in figure 1.

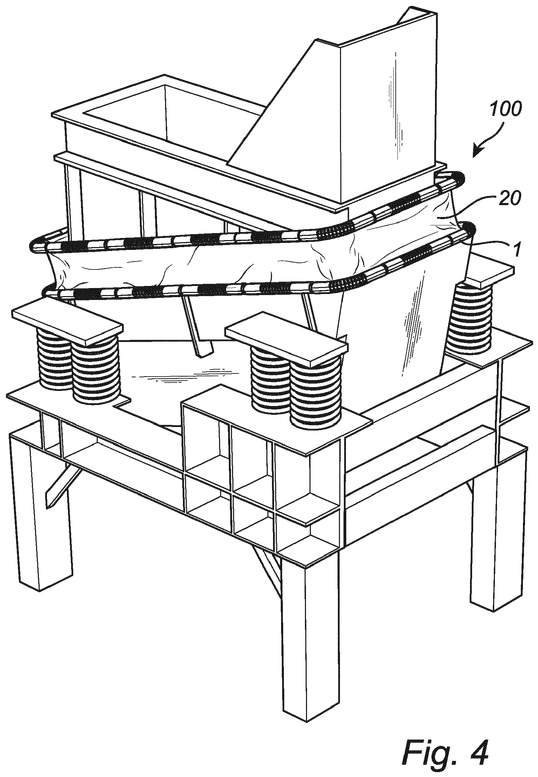

Figure 4 discloses a mining equipment 100, in which several mounting bars 1 are keeping a sheet 20 in place in order to tightly seal the sheet to the equipment hindering dust and other particles to be distributed outside of the equipment. The mounting bars 1 are lengthwise arranged one adjacent to each other, so that they are tightly arranged side by side. This arrangement is made at both ends of the sheet, to the wall edges of the equipment to which the sheet is arranged. The sealing sheet 20 is a flexible material, such as a polymer or rubber.

## Claims

1. A mounting bar (1) for arranging a dust sealing sheet (20) in connection to a mining equipment (100), the bar (1) comprising:
an elongated extension with a specific length having a longitudinal axis (X);
a tubular cross sectional shape with a longitudinal recess (3) along one side of the bar (1); and
a plurality of slots (2) being radially arranged along the bar (1) throughout the longitudinal direction and being perpendicular to the longitudinal axis (X) wherein at the location of the slot (2) the bar comprises a longitudinal segment (4) interconnecting with the bar (1).

2. The bar (1) as claimed in claim 1, wherein the slots (2) being evenly distributed throughout the longitudinal direction with two consecutive slots (2) having a specific separation distance in longitudinal direction.

3. The bar (1) as claimed in claim 1 or 2, wherein the slot (2) having the widest separation distance in longitudinal direction radially opposite of the longitudinal segment (4) such that the slot (2) being non-uniform around the perimeter of a cross section of the bar (1).

4. The bar (1) as claimed in any of the preceding claims, wherein at the location of the slot (2) the bar (1) throughout the longitudinal direction of the slot (2) comprising the longitudinal segment (4) having a perimeter being at least 5% of the full perimeter of the cross section of the bar (1).

5. The bar (1) as claimed in any of the preceding claims, wherein the number of slots (2) being at least three.

6. The bar (1) as claimed in any of the preceding claims, wherein the bar (1) comprising slots (2) throughout at least 50% of its length.

7. The bar (1) as claimed in any of the preceding claims, wherein the slots (2) being arranged in the middle of the length of the bar (1).

8. The bar (1) as claimed in any of the preceding claims, wherein the material of the bar (1) being a polymer.

9. A dust sealing assembly (10) comprising a mounting bar (1) as claimed in any preceding claim, wherein the assembly (10) comprising:
a dust sealing sheet (20) arranged between two walls of a mining equipment (100);
wherein a plurality of mounting bars (1) being arranged at the edges for tightly sealing the sheet (20) between the edges.

10. A dust sealing assembly (10) according to claim 9, wherein the assembly (10) comprising the plurality of mounting bars (1) being arranged one adjacent to another in longitudinal direction throughout the edges of the walls.
